# EUROPÄISCHE PATENTANMELDUNG

(11) **EP 0 860 783 A2**
(43) Veröffentlichungstag der Anmeldung: **26.08.1998**
(21) Anmeldenummer: 98102689.1
(22) Anmeldetag: 17.02.1998
(51) Int. Cl.: G06F 15/02

(54) **Elektronischer Taschenrechner zur Erfassung und Darstellung der finanziellen Situation**

(30) Priorität: 19.02.1997 DE 29702865 U
(71) Anmelder: Pumpf, Roland, 91054 Erlangen (DE)
(72) Erfinder: Pumpf, Roland, 91054 Erlangen (DE)

(57) **Zusammenfassung**

Auf Basis eines handlichen elektronischen Gerätes, beispielsweise eines elektronischen Taschenbuchs oder Mobiltelefons, wird ein Gerät geschaffen, das über seine bisherigen Funktionen hinaus - abhängig von Kategorien zugeordneten, Geldbeträge repräsentierenden, Eingaben in ein von einem Programmsystem verwaltetes Kategoriensystem, sonst aber voll automatisch - von den monetären Transaktionen kategorienspezifische innerhalb kalendarischer Zeiteinheiten gültige erfassende und prognostizierende Übersichten mit Motivations- und Warncharakter bildet und eine festgelegte Auswahl hiervon stets abrufbar zu Informationszwecken am Gerät zur Verfügung stellt mit dem Ziel, den Anwender dabei zu unterstützen, seine Sparrate steigern beziehungsweise auf hohem Niveau halten zu können. Die vom Erfindungssystem errechneten Kennzahlen sind dabei automatisch innerhalb kalendarischer Zeiteinheiten, dem natürlichen menschlichen Orientierungskontext, gültig. Um dies zu gewährleisten, wird das das Kategorienssystem verwaltende Programm mit der im Gerät vorhandenen elektronischen Uhr, die einen Kalender realisiert, gekoppelt.
Erfindungsrelevant ist ebenso die Realisierung der Bedienschnittstelle für derartige Systeme über ein Spracherkennungsssystem, das Vorhandensein physikalisch getrennter und überlagerter Anzeigebereiche und die Ausprägung des Systems als Taschenrechner, Computeruhr, Mobiltelefon oder Gerätekombination hiervon.

## Beschreibung

Die vorliegende Erfindung betrifft elektronische Taschenbücher mit Tastatur, einer Anzeige und einer Kalenderfunktion, aber auch solchermaßen ausgestattete elektronische Palmtop-Rechner und Taschenrechner, ebenso mit Kalenderfunktion ausgestattete Mobiltelefone, Computeruhren mit Tastatur und Anzeige, Gerätekombinationen hiervon oder andere mit hohen Tragekomfort und Kalenderfunktion ausgestattete elektronische Geräte. Diesen leistungsfähigen elektronischen Geräten ist eine für die Erfindung *unabdingbare* Eigenschaft gemeinsam: Die Geräte sind mit einem hohen Tragekomfort ausgestattet - sie können bequem beispielsweise in einer Jacken- oder Hemdtasche oder an einem Gürtel befestigt getragen werden, sie gewähren dabei volle Bewegungsfreiheit und der Zugriff gestaltet sich unkompliziert -, somit können sie zum ständigen Begleiter des Anwenders werden und sind jederzeit einsetzbar.

Die Erfindungsaufgabe besteht darin, ein elektronisches Gerät zu schaffen, das über seine bisherigen Funktionen hinaus - abhängig von Kategorien zugeordneten, Geldbeträge repräsentierenden, Eingaben in ein von einem Programmsystem verwaltetes Kategoriensystem, sonst aber automatisch - von den monetären Transaktionen kategorienspezifische innerhalb kalendarischer Zeiteinheiten gültige erfassende und prognostizierende Übersichten mit Motivations- und Warncharakter bildet und eine festgelegte Auswahl hiervon stets abrufbar zu Informationszwecken am Gerät zur Verfügung stellt mit dem Ziel, den Anwender dabei zu unterstützen, seine Sparrate steigern beziehungsweise auf hohem Niveau halten zu können. Die vom Erfindungssystem errechneten Kennzahlen (=erfassende Übersichten und Prognosen) sind dabei automatisch innerhalb kalendarischer Zeiteinheiten, dem natürlichen menschlichen Orientierungskontext, gültig.

Um dies zu gewährleisten, wird das das Kategorienssystem verwaltende Programm mit der im Gerät vorhandenen elektronischen Uhr, die einen Kalender realisiert, gekoppelt. Eine Funkuhr wird ebenfalls als elektronische Uhr angesehen. Programm und Uhr können in einem Logikbaustein integriert sein. Die Uhr stellt die Datumswerte für das Programm zur Verfügung. Normalerweise wird das Programm auf die Datumswerte lesend zugreifen, seine Datumswerte damit aktualisieren und die neuen Werte auf die die Kennzahlen bestimmenden Rechenvorschriften anwenden. Die Kopplung ist aber auch über Schreibrechte der Uhr auf Programmvariable, die im Programm die Datumswerte repräsentieren, möglich. Auf diese Weise können vielfältige kalendarische Zeitabschnitte gestaltet werden. Wenn hier in dieser Beschreibung und in der Formulierung der Schutzansprüche von kalendarischen Zeitabschnitten die Rede ist, soll darunter verstanden werden: jeder die kalendarischen Zeitperioden 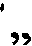 Tag", 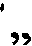 Kalenderwoche", 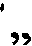 Kalendermonat" und 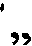 Kalenderjahr" repräsentierende aktuelle kalendarische Zeitabschnitt, jeder diese Zeitperioden repräsentierende zurückliegende und zukünftige kalendarische Zeitabschnitt sowie jedes zusammenhängende Vielfache davon, beispielsweise die letzten 2 zurück-liegenden Kalendermonate oder die 3 letzten und das aktuelle Monat. Ausgenommen von dieser Definition ist der Zeitabschnitt 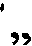 seit der Inbetriebnahme des Programmes bis zum heutigen Tag", da zur Realisierung dieses kalendarischen Zeitabschnittes eine Uhr oder anderweitige Steueraktionen nicht notwendig sind. Skalierungen unterhalb der Zeitperiode 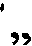 Tag" werden nicht in Betracht gezogen, da diese Zeitebenen als natürlicher Orientierungskontext bedeutungslos sind.

Dem Anwender ist damit auf einfache Weise - er hat einzig seine geldwerten Transaktionen zeitnah in dem Kategoriensystem zu verteilen - jederzeit auf Anforderung hin ein detailliertes und nützliches Wissen entsprechend den kategorienspezifisch ermittelten, zeitbezogenen Kennzahlen verfügbar. Normalerweise werden die Kategorien so vorliegen, daß die persönliche Ausgabenstruktur, die persönliche Einnahmensituation aber auch die Überschußsituation schnell sichtbar wird. Der Anwender kann damit realistische Sparziele festlegen und effektiv innerhalb des natürlichen Orientierungskontexts verfolgen. Der geeignetste elektronische Träger der Erfindung ist das elektronische Taschenbuch, da es sich wegen seiner Größe und seiner Darstellungskapazität gleichermaßen bequem als Erfassungs- und Anzeigegerät verwenden läßt. Wird ein Taschenrechner, ein Mobiltelefon oder eine Computeruhr mit Anzeige und Tastatur verwendet, ist mehr der Charakter als Erfassungsgerät betont. In diesem Fall sollte das Gerät möglichst zur Produktabrundung über eine einfache Datentransferschnittstelle verfügen, um die vom Programm verwalteten, die Kategorien repräsentierenden Datenstrukturen samt Inhalt an ein PC-Rechnersystem zu weiterführenden Auswertungen und Datensicherungszwecken übertragen zu können. Aber auch für ein elektronisches Taschenbuch ist zum Zweck weitergehender Auswertungen und aus Datensicherungsgründen ein einfacher Datentransfermechanismus nützlich. In Hinblick auf die in der EU bevorstehende Einführung des Euros kann das Programm auch in die Lage versetzt sein, Beträge in zwei verschiedenen Währungseinheiten zu verarbeiten.

Gegenüber bereits auf dem Markt befindlichen Systemen zeichnet sich das Erfindungssystem maßgeblich dahingehend aus, daß es mit einem kalendarischen Zeitmanagement gekoppelt ist - auf den Datenbestand im System wirkt neben den Anwendereingaben zusätzlich die Zeit mit kalendarischen Einheiten - und damit automatisch ohne Zutun des Anwenders erfassende Übersichten innerhalb kalendarischer Zeitabschnitte wie Tag, Woche, Kalendermonat oder Kalenderjahr anlegt und ebenso automatisch auf aktuelle kalendarische Zeitabschnitte bezogenen Prognosen beispielsweise über das zukünftige Ausgabeverhalten, die zukünftige Einnahme- und Überschußsituation bildet. Infolgedessen stellt es die Übersichten und Zielgrößen erstmals im natürlichen Orientierungskontext zur Verfügung und entlastet von Systemverwaltungstätigkeiten. Erfindungsrelevant ist ebenso die Realisierung der Bedienschnittstelle für derartige Systeme über ein Spracherkennungsssystem, das Vorhandensein physikalisch getrennter und überlagerter Anzeigebereiche und die Ausprägung des Systems als Taschenrechner, Computeruhr, Mobiltelefon oder Gerätekombination hiervon.

Es ist zu erwarten, daß solchermaßen ausgestattete elektronische Geräte einen echten Wettbewerbsvorteil besitzen werden, da sie für den Anwender einen zusätzlich Hauptnutzen implizieren. Schutzrechte sind für die Vermarktung unablässig.

Nachfolgend wird eine Ausführungsform der Erfindung näher beschrieben.

Sie wird mit Hilfe eines üblichen elektronischen Taschenbuches realisiert. Die Tastatur des Taschenbuches verfügt über ein Zahlenfeld, ein Buchstabenfeld, über Funktionstasten und Steuertasten. Die Anzeige ist als LCD-Bildschirm ausgebildet. Im elektronischen Taschenbuch ist ein Kalender mit Jahres-, Monats-, Wochen- und Tagesangabe ausgeführt, auf den das die Kategorien verwaltende Programm zugreifen kann.

Die Anwenderschnittstelle der Erfindung soll bedientechnisch kompatibel in die Bedienphilosophie des elektronischen Taschenbuches eingebettet sein. Dies betrifft vor allem die Anwahl des Erfindungssystems, die Anwahl einer Kategorie, die Eingabe- und Anzeigemittel, den Wechsel zu anderen Funktionalitäten und die direkte Beendigung.

Das Programm repräsentiert in dieser Ausführungsform jede Kategorie als intern verwaltetes Datenfeld. Ein Datenfeld enthält in einer Datenfeldkomponente den Namen der Kategorie, in den weiteren Datenfeldkomponenten je eine Kennzahl, dies ist entweder eine vom Programm automatisch ermittelte zeitbezogene kategorienspezifische Kennzahl oder ein eine geldwerte Transaktion darstellender kategorienspezifischer Eingabewert.

Das Programm stellt Ausgabe-, Einnahniekategorien und eine Überschußkategorie zur Verfügung. In diesen Kategorien erfolgen Beobachtung und Darstellung der Ausgaben-, der Einnahmen- und der Überschußsituation hauptsächlich innerhalb kalendarischer Zeitgrenzen. Einige der Kategorien fungieren hierbei als zusammenfassende Kategorie, indem sie die Werte zeit- und darstellungsbezogen gleicher Kennzahlen als Summe zusammenfassen.

Alle Kategorien besitzen eine gleiche Anzahl Datenfeldkomponenten, in welchen die kategorienspezifisch aufgelaufenen Monatsendsummen zurückliegender Monate in dieser Ausführungsform allein als Summenwerte statisch abgespeichert werden. Diese Datenfeldkomponenten sind als Ringspeicher organisiert. Ist der Ringspeicher voll, überschreibt der neueste Monatsendwert den im System vorhandenen ältesten Monatsendwert der gleichen Kategorie.

Alle anderen Kennzahlen beinhaltenden Datenfeldkomponenten sind mit einem aktuellen Zeitbezug behaftet und werden deshalb dynamisch gespeichert.

Die Beobachtung des momentanen Ist-Standes geschieht hauptsächlich innerhalb des aktuellen Monats, aber auch des aktuellen Tages. Kategorienspezifische Ausgaben und Einnahmen können als im aktuellen Zeitabschnitt bisher aufgelaufene Summenkennzahlen, oder als Durchschnittskennzahlen erfaßt sein - im Falle des Zeitabschnittes 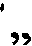 aktuelles Monat" wäre dies der tagesaktuelle Durchschnittswert als Quotient aus der bisher im Monat aufgelaufenen Summe und der Anzahl der bisherigen Tage im Monat -. Aber die Ausführungsform hat auch Kennzahlen, die über den Ist-Stand unter Einbeziehung der gesamten Betriebszeit informieren. Hierbei handelt es sich nicht um eine innerhalb eines kalendarischen Zeitabschnittes gültige Kennzahl, da dieser Zeitabschnitt nicht als solcher betrachtet wird. Das Erfordernis, daß alle Kennzahlen innerhalb kalendarischer Zeiteinheiten gültig sein müssen, wird in den Ansprüchen jedoch nicht postuliert.

Nah am Ist-Stand wäre eine kategorienspezifische Kennzahl, die die Endsummen der 3 letzten zurückliegenden Monate als Summe, als Monats- oder als Tagesdurchschnittszahl repräsentieren würde.

Prognosen werden vorwiegend auf das aktuelle Monatsende und das Ende des Kalenderjahres hin zur Verfügung gestellt. Bezieht sich die Prognose auf das Monatsende eignen sich bei Kategorien mit hoher Transaktionsrate für die Hochrechnung bereits aktuelle Monatsdurchschnitte, bei Kategorien mit mittlerer Transaktionsrate empfiehlt es sich dagegen, die Prognose unter Berücksichtigung einer Anzahl kategorienspezifisch gleicher Monatsendwerte einerseits und dem aktuellen Transaktionsstand anderseits zu ermitteln. Handelt es sich um Kategorien mit niedriger Transaktionsrate ist die Gestaltung der Prognoseformel sehr von den zeitlichen und betragsmäßigen Streuwerten der einzelnen Transaktionen abhängig. Einige Monatsausgaben bzw. Einnahmen lassen sich pro Monat sehr exakt vorhersagen, weil sie betragsmäßig konstant wiederkehren. Diese Beträge könnten in einer wiederkehrenden Ausgabe- bzw. wiederkehrenden Einnahmekategorie zusammengefaßt werden. Bei Prognosen, die auf das Jahresende hin gerichtet sind, könnte die zu prognostizierende Transaktionssumme der verbleibenden Zeit auf gegebenenfalls geglätteten Monatsdurchschnitten zurückliegender Monate basieren.

Zum Abschluß der Beschreibung der ersten Ausführungsform soll noch näher auf 3 Kennzahlen der Überschußkategorie eingegangen werden. Sie sind für eine exponierte Benutzerkontrolle prädestiniert, wozu die Ausführungsformen 9 und 10 in besonderer Weise nützliche Hardwaremittel zur Verfügung stellen. Alle 3 Kennzahlen sollen in der Weise vom gleichen Typ sein, daß jede Kennzahl vermögensbildende Ausgaben beinhaltet oder diese ausschließt.

Die erste Kennzahl zeigt den monatlichen Gesamtüberschuß als Tagesdurchschnittswert, der zu erzielen wäre, wenn der monatsaktuellen Einnahmenprognose ein durchschnittliches Ausgabenverhalten aus der näheren Vergangenheit gegenüber stünde, wobei dieses Verhalten durch den in Bezug auf die letzten 3 zurückliegenden Monate den Mittelplatz einnehmenden Ausgabenbetrag definiert wird. Sind noch keine 3 derartigen Monate verfügbar, verwendet das Programm den Gesamtausgabenbetrag des gegenwartsnächsten Monats. Im Monat der Inbetriebnahme, wenn kein zurückliegender Monatswert vorliegt, ist der Wert der Kennzahl auf den Wert 1 gesetzt.

Die zweite Kennzahl prognostiziert auf Basis der monatsaktuellen Einnahmenprognose und monatsaktuellen Ausgabenprognose, in die ja das aktuelle Ausgabenverhalten hineinwirkt, den monatsaktuellen Gesamtüberschuß, zur besseren Vergleichbarkeit mit der ersten Kennzahl wegen ebenfalls als Tagesdurchschnittswert.

Die dritte Kennzahl zeigt basierend auf der Differenz zwischen erster und zweiter Kennzahl den im laufenden Monat noch tagesdurchschnittlich für ausgewählte Ausgabekategorien zur Verfügung stehend Betrag an, der unter der Annahme, daß sich die restlichen Ausgabekategorien wie prognostiziert entwickeln, maximal verbraucht werden kann, um mindestens die durch die erste Kennzahl markierte Überschußsituation realisieren zu können. Von Vorteil wäre, wenn das Programm hier einfache Konfigurationsmittel bereitstellen würde, mittels derer der Status einer Ausgabekategorie als prognostizierte oder prognosefreie Kategorie variiert werden kann.

### 2. Ausführungsform

Wie Ausführungsform 1, jedoch stellt das Programm zusätzlich weitere Kategorien bereit, vermöge derer geldwerte Transaktionen innerhalb situationsbezogener Zeitgrenzen beobachtet werden können. Das Erfordernis für situationsbezogene Zeitgrenzen ist beispielsweise durch eine Urlaubs- oder eine Dienstreisensituation gegeben. Kalendarische Datumsveränderungen würden hier nur je Kategorie auf wenige Datenfeldkomponten wirken.

### 3. Ausführungsform

Sie betrifft auch in Hinblick auf die Europäische Währungsunion die Darstellungsmöglichkeiten in zwei Währungseinheiten und ist wie eine oder beide der Ausführungsformen 1 bis 2 realisiert, jedoch haben Kategorien, welche ein Eingabefeld zur Verfügung stellen, in dieser Ausführungsform zwei Eingabefelder. Im zweiten Eingabefeld können geldwerte Beträge darstellende Zahlengrößen alternativ in einer zweiten Währungseinheit kategorienspezifisch erfaßt und in dem zugehörigen Datenstrukturelement gespeichert werden. Ein weiteres Eingabefeld ist für die dynamische Hinterlegung eines Umrechnungskurses reserviert. Das Programm rechnet jeden in eines dieser zusätzlichen Eingabefelder eingegebenen Betrag entsprechend dem aktuell hinterlegten Umrechnungskurs in eine der Erstwährungseinheit entsprechende Betragsgröße um und speichert die umgerechnete Größe in der gleichen Kategorie in dem Erstwährungseingaben repräsentierenden Datenstrukturelement ab. Die Eingaben wirken auf alle betroffenen Kennzahlen in der die Erstwahrung repräsentierenden Betragsgröße.

### 4. Ausführungsform

Sie betrifft ebenfalls die Darstellungsmöglichkeit in zwei Währungseinheiten und ist wie eine oder mehrere der Ausführungsformen 1 bis 3 realisiert, jedoch gibt es einen Schalter, vermöge dessen die Geldwerte darstellenden Eingaben und Geldwerte darstellenden Kennzahlen alle in eine zweite Währungseinheit entsprechend eines immer wieder neu parametrierbaren Kursfaktors umgerechnet und abgespeichert werden können, wobei für die Hinterlegung des Umrechnungskurses selbst ein eigenes Eingabefeld bereitgestellt wird. Nachfolgende Eingaben werden ohne Kursfaktor zur Wirkung gebracht.

### 5. Ausführungsform

Sie betrifft ebenfalls die Darstellungsmöglichkeit in zwei Währungseinheiten und ist wie eine oder mehrere der Ausführungsformen 1 bis 4 realisiert, jedoch stehen hier zusätzliche Speichermittel zur Verfügung, vermöge derer jeder Kategorie eine zweite Kategorie zugeordnet wird, die vermöge eines immer wieder neu parametrierbaren Kursfaktors so miteinander verknüpft sind, daß zwei äquivalente Kategorienklassen gebildet werden und das Programm eine Eingabe, die in eine Kategorie erfolgt, innerhalb der Kategorienklasse, der die Kategorie angehört, ohne Kursfaktor und in der zweiten Kategorienklasse mit dem Kursfaktor versehen zur Wirkung bringt.

### 6. Ausführungsform

Wie eine oder mehrere der Ausführungsformen 1 bis 5, jedoch mit zusätzlichen optischen Anzeigemittel versehen, die anzeigen, wie sich zwei auf die gleiche Kategorie und Zeitperiode bezogene, jedoch in verschiedenen kalendarischen Zeitabschnitten ermittelte Kennzahlen relativ zueinander bewegen, und/oder die anzeigen, ob sich eine Durchschnittskennzahl bei der letzten Aktualisierung erhöht oder vermindert hat, indem jede Durchschnittskennzahl im Anzeigebereich beispielsweise mit einem Plus oder Minuszeichen versehen wird.

### 7. Ausführungsform

Wie eine oder mehrere der Ausführungsformen 1 bis 6, jedoch mit einer Datentransferschnittstelle und einem Datentransfermodul versehen, vermöge dessen die vom Programm verwalteten Datenstrukturen samt Inhalten an ein PC - Rechnersystem zu weiterführenden Auswertungen und Datensicherungszwecken übertragen werden können.

### 8. Ausführungsform

Wie eine oder mehrere der Ausführungsformen 1 bis 7, jedoch ist das Gerät ein Palmtop Computer, ein Taschenrechner, ein Mobiltelefon, eine Computeruhr mit Tastatur und Anzeige, eine Gerätekombination hieraus oder ein anderes mit hohem Tragekomfort ausgestattetes elektronisches Gerät.

### 9. Ausführungsform

Wie eine oder mehrere der Ausführungsformen 1 bis 8, jedoch hat sie zwei anordnungsmäßig getrennte Anzeigebereiche in der Weise, daß das Erfindungssystem für die bildschirmorientierte Eingabe und für die Anzeige der Inhalte der Datenstrukturelemente den ersten Anzeigebereich nutzt, daß darüber hinaus aber im zweiten Anzeigebereich immer exklusiv Kennzahlen in aktueller Form angezeigt werden, die der Anwender vorher hierfür ausgewählt hat.

### 10. Ausführungsform

Wie eine oder mehrere der Ausführungsformen 1 bis 9, jedoch hat sie im Anzeigebereich eine Anzahl Anzeigefelder in der Weise, daß, sobald eine bildschirmorientierte Eingabe erfolgt und verarbeitet ist, in je einem dieser Anzeigefelder für eine kurze Zeitdauer der ursprüngliche Inhalt durch eine Kennzahl, die der Nutzer zu einem früheren Zeitpunkt für diesen Zweck bestimmt hat, überdeckt wird. Die Anzeigefelder sind bezogen auf den Bildschirm absolut und/oder relativ positioniert.

### 11. Ausführungsform

Wie eine oder mehrere der Ausführungsformen 1 bis 10, jedoch ist in die Benutzerschnittstelle des Programms ein Spracherkennungssystem integriert, so daß die Zuordnung und Eingabe der Geldbeträge in das Kategoriensystem und/oder die Auswahl der Kennzahlen für die Anzeige am Bildschirm teilweise oder vollständig mit sprachlichen Befehlsvereinbarungen erfolgt.

## Patentansprüche

1. Elektronisches Taschenbuch mit einer Bildschirmanzeige, einer Tastatur, einem Rechenwerk, einem Datenspeicher, einer mit einer elektronischen Uhr gekoppelten Kalenderfunktion und einem Programm, das es ermöglicht, mittels seiner Benutzerschnittstelle Geldbeträge innerhalb einer vom Programm verwalteten, ein Kategoriensystem repräsentierenden, Datenstruktur kategorienspezifisch zuzuordnen und zu erfassen, **dadurch gekennzeichnet,** daß das Programm mit der Kalenderfunktion in der Weise verbunden ist, daß es abhängig von den Kategorien zugeordneten Eingaben automatisch kategorienspezifische innerhalb kalendarischer Zeiteinheiten gültige erfassende und prognostizierende Kennzahlen bildet - jede dieser Kennzahl innerhalb einer kalendarischen Zeiteinheit gültig -, von denen eine Auswahl am Bildschirm auf Anforderung hin jederzeit angezeigt werden kann.

2. Erfindung nach Anspruch 1, **dadurch gekennzeichnet,** daß das Programm zusätzlich innerhalb benutzergesetzter Zeitgrenzen gültige kategorienspezifische Kennzahlen ermittelt.

3. Erfindung nach einem oder beiden der Ansprüche 1 bis 2, **dadurch gekennzeichnet,** daß zusätzliche Eingabefelder zur Verfügung stehen, vermöge derer geldwerte Beträge darstellende Zahlengrößen alternativ in einer zweiten Währungseinheit kategorienspezifisch erfaßt und in einem zugehörigen Datenstrukturelement gespeichert werden können. Ein spezielles Eingabefeld ist für die dynamische Hinterlegung des Umrechnungskurses reserviert. Das Programm rechnet jeden in eines dieser zusätzlichen Eingabefelder eingegebenen Betrag entsprechend dem aktuell hinterlegten Umrechnungskurses in eine der Erstwährungseinheit entsprechende Betragsgröße um und speichert die umgerechnete Größe in dem für Erstwährungseingaben zugehörigen Datenstrukturelement ab. Die Wirkungen der Eingaben auf alle betroffenen Kennzahlen erfolgen in der die Erstwährung repräsentierenden Betragsgröße.

4. Erfindung nach einem oder mehreren der Ansprüche 1 bis 3, **dadurch gekennzeichnet,** daß sie einen Schalter aufweist, vermöge dessen die Geldwerte darstellenden Eingaben und Geldwerte darstellenden Kennzahlen alle in eine zweite Währungseinheit entsprechend eines immer wieder neu parametrierbaren Kursfaktors umgerechnet und abgespeichert werden. Nachfolgende Eingaben werden ohne Kursfaktor zur Wirkung gebracht.

5. Erfindung nach einem oder mehreren der Ansprüche 1 bis 4, **dadurch gekennzeichnet,** daß sie zusätzliche Speichermittel zur Verfügung hat, vermöge derer jeder Kategorie eine zweite Kategorie zugeordnet wird, die vermöge eines immer wieder neu parametrierbaren Kursfaktors so miteinander verknüpft sind, daß zwei äquivalente Kategorienklassen gebildet werden und das Programm eine Eingabe, die in eine Kategorie erfolgt, innerhalb der Kategorienklasse, der die Kategorie angehört, ohne Kursfaktor und in der zweiten Kategorienklasse mit dem Kursfaktor versehen zur Wirkung bringt.

6. Erfindung nach einem oder mehreren der Ansprüche 1 bis 5, **dadurch gekennzeichnet,** daß sie mit zusätzlichen optischen Anzeigemittel versehen ist, die anzeigen, wie sich zwei auf die gleiche Kategorie und Zeitperiode bezogene, jedoch in verschiedenen kalendarischen Zeitabschnitten ermittelte Kennzahlen relativ zueinander bewegen, und/oder die anzeigen, ob sich eine Durchschnittskennzahl bei der letzten Aktualisierung erhöht oder vermindert hat, indem jede Durchschnittskennzahl im Anzeigebereich beispielsweise mit einem Plus oder Minuszeichen versehen wird.

7. Erfindung nach einem oder mehreren der Ansprüche 1 bis 6, **dadurch gekennzeichnet,** daß das Gerät über eine Datentransferschnittstelle und über ein Datentransfermodul verfügt, vermöge dessen die vom Programm verwalteten Datenstrukturen samt Inhalten an ein PC - Rechnersystem zu weiterführenden Auswertungen und Datensicherungszwecken übertragen werden können.

8. Erfindung nach einem oder mehreren der Ansprüche 1 bis 7, **dadurch gekennzeichnet,** daß das elektronische Taschenbuch durch ein Palmtop Gerät, einen Taschenrechner, ein Mobiltelefon, eine Computeruhr mit Tastatur und Anzeige, eine Gerätekombination hieraus oder einem anderen mit hohem Tragekomfort ausgestatteten elektronischen Gerät ersetzt ist.

9. Erfindung nach einem oder mehreren der Ansprüche 1 bis 8, **dadurch gekennzeichnet,** daß sie aufweist zwei anordnungsmäßig getrennte Anzeigebereiche in der Weise, daß das Erfindungssystem für die bildschirmorientierte Eingabe und für die Anzeige der Inhalte der Datenstrukturelemente den ersten Anzeigebereich nutzt, daß darüber hinaus aber im zweiten Anzeigebereich immer exklusiv Kennzahlen in aktueller Form angezeigt werden, die der Anwender vorher hierfür ausgewählt hat.

10. Erfindung nach einem oder mehreren der Ansprüche 1 bis 9, **dadurch gekennzeichnet,** daß sie aufweist im (ersten) Anzeigebereich eine Anzahl Anzeigefelder in der Weise, daß, sobald eine bildschirmorientierte Eingabe erfolgt und verarbeitet ist, in je einem dieser Anzeigefelder für eine kurze Zeitdauer der ursprüngliche Inhalt durch eine Kennzahl, die der Nutzer zu einem früheren Zeitpunkt für diesen Zweck bestimmt hat, überdeckt wird. Die Anzeigefelder sind bezogen auf den Bildschirm absolut und/oder relativ positioniert.

11. Erfindung nach einem oder mehreren der Ansprüche 1 bis 10, **dadurch gekennzeichnet,** daß in die Benutzerschnittstelle des Programms ein Spracherkennungssystem integriert ist, so daß die Zuordnung und Eingabe der Geldbeträge in das Kategoriensystem und/oder die Auswahl der Kennzahlen für die Anzeige am Bildschirm teilweise oder vollständig mit sprachlichen Befehlsvereinbarungen erfolgt.
